# EUROPÄISCHE PATENTSCHRIFT

(11) **EP 3 129 612 B1**
(45) Veröffentlichungstag und Bekanntmachung des Hinweises auf die Patenterteilung: **13.06.2018**
(21) Anmeldenummer: 15757461.7
(22) Anmeldetag: 24.08.2015
(51) Int. Cl.: F01K 17/02, F01K 23/08, F01K 23/10, F22B 37/02

(54) **FERNWÄRMEKRAFTWERK**
DISTRICT HEATING POWER PLANT
CENTRALE THERMIQUE DISTANTE

(30) Priorität: 27.08.2014 DE 102014217071
(43) Veröffentlichungstag der Anmeldung: 15.02.2017
(73) Patentinhaber: Siemens Aktiengesellschaft, 80333 München (DE)
(72) Erfinder: JURETZEK, Uwe, 91058 Erlangen (DE)
(86) Internationale Anmeldenummer: PCT/EP2015/069320
(87) Internationale Veröffentlichungsnummer: WO 2016/030313

(56) Entgegenhaltungen:
- WO-A1-2011/090416
- DE-C1- 19 702 830
- US-A1- 2004 060 277
- US-A1- 2013 133 326

## Beschreibung

Die Erfindung betrifft ein Fernwärmekraftwerk.

Der Gesamtwirkungsgrad (Verhältnis von nutzbarer Energie zu eingesetzter Brennstoffenergie) eines gasturbinenbasierten Fernwärmekraftwerks ist insbesondere durch die Abgasverluste am Austritt des Abhitzekessels begrenzt. Zur Minimierung dieser Verluste und zur entsprechenden Steigerung des Gesamtwirkungsgrades muss diese Energie für die Fernwärmeversorgung weitestgehend nutzbar gemacht werden. Der Gesamtwirkungsgrad kann dabei insbesondere durch die sogenannte Brennwertnutzung (Wassertaupunkt wird dabei unterschritten) erhöht werden. Dies erfolgte wegen der damit einhergehenden Korrosions- und Emissionsprobleme bisher in der Regel nicht und wenn doch, dann nur sehr eingeschränkt.

Um das Abgas weitestgehend abzukühlen und diese Wärme im Fernwärmesystem nutzbar zu machen, wurden bisher sogenannte Fernwärmeeconomizer als letzte Heizfläche in den Abhitzekessel eingebracht, bevor das Abgas über den Kamin in die Umwelt abgegeben wurde. Wie weit das Abgas dabei abgekühlt und damit die darin enthaltene Wärme genutzt werden kann, hängt dabei maßgeblich von der Rücklauftemperatur des Fernwärmesystems ab.

Außerdem war die Vermeidung der Unterschreitung des Abgastaupunktes (Wasser und Schwefelsäure) an der Heizfläche ein wichtiges Kriterium. Dazu wurde ggf. die Temperatur des eintretenden Fernwärmewassers durch entsprechende Rezirkulation vom Austritt zum Eintritt des Fernwärmeeconomizers soweit erhöht, dass Korrosionsprobleme an den Heizflächen des Fernwärmeeconomizers und nachfolgenden Kesselbauteilen (z.B. Kamin) vermieden werden konnten.
Bisher wurde das Abgas selbst nicht unter den Taupunkt abgekühlt, um die Emission von "Säuretröpfchen" und damit zusammenhängende Korrosionsprobleme im Abhitzekessel selbst und in der Umgebung des Kraftwerkes zu vermeiden. Darüber hinaus muss das Abgas noch eine ausreichende Temperatur aufweisen, um durch den damit verbundenen Auftrieb sicherzustellen, dass es sich ausreichend großflächig verteilt und sich nicht in der Umgebung des Kraftwerkes anreichert; als Richtwert wurde aus diesen Gründen in der Vergangenheit eine Abgasmindesttemperatur von 70°C angesetzt.

Aus den zuvor genannten Gründen waren damit dem Gesamtwirkungsgrad bei ca. 91-92% (bezogen auf den unteren Heizwert) Grenzen gesetzt und eine entsprechende relativ große Wärmemenge wurde ungenutzt an die Umgebung abgegeben.

Aufgabe der Erfindung ist es, ein Fernwärmekraftwerk mit verbessertem Gesamtwirkungsgrad anzugeben.

Die Erfindung löst die auf ein Fernwärmekraftwerk gerichtete Aufgabe, indem sie vorsieht, dass bei einem derartigen Fernwärmekraftwerk, umfassend eine Gasturbine und einen der Gasturbine in Strömungsrichtung eines Abgases nachgeschalteten Abhitzekessel mit einem der Gasturbine zugewandten heißen Ende und einem gegenüberliegenden kalten Ende, bei dem im Bereich des kalten Endes ein Verdampfer mit einem Auslass angeordnet ist, und der Auslass mit einem Saugmedium-Eingang einer Strahlpumpe verbunden ist, deren Treibmedium-Eingang mit einem Wasser-Dampf-Kreislauf des Fernwärmekraftwerks verbunden ist und deren Austritt primärseitig in einen Heizkondensator mündet, der sekundärseitig in eine Fernwärmewasserleitung geschaltet ist, wobei stromab des Verdampfers eine Vorrichtung zur Erwärmung eines Abgases mit einer Wärmetauscherfläche angeordnet ist, die Primärseite der Wärmetauscherfläche in eine zum Treibmedium-Eingang der Strahlpumpe führende Treibdampfleitung geschaltet ist.

Die Erfindung sieht also vor, dass in Abgasströmungsrichtung stromab der bisherigen letzten Heizfläche (Fernwärmeeconomizer) ein weiterer Verdampfer als Teil des Wasser-Dampf-Kreislaufes des Fernwärmekraftwerkes in den Abhitzekessel eingebracht wird. Damit bei diesem an sich niedrigen Abgastemperaturniveau (in der Regel zwischen 70°C bis 90°C) noch eine Verdampfung des Kreislaufwassers und insbesondere die Verdampfung auf einem Temperaturniveau unterhalb des Wassertaupunktes des Abgases stattfindet (zur Brennwertnutzung), muss der Druck im Verdampfer entsprechend weit unter das Atmosphärenniveau verringert werden. Dies erfolgt über eine oder mehrere Dampfstrahlpumpen welche ihren Treibdampf von einem ausreichend hohen Druckniveau aus dem Wasser-Dampf-Kreislauf des Fernwärmekraftwerkes beziehen. Mit der Absenkung des Druckes sinkt die notwendige Verdampfungstemperatur und der Dampf wird mittels der Restwärme aus dem Abgas auf sub-atmosphärischem Niveau erzeugt. Je nach Auslegung der Strahlpumpen, Restwärmemenge im Abgas, der verwendeten Treibdampfmenge, etc. stellt sich dann ein Gleichgewichtsdruck ein.

Dieser sub-atmosphärische Dampf (z.B. 30 mbar) aus dem Verdampfer wird mittels Treibdampf von der Dampfstrahlpumpe angesaugt, mischt sich mit dem Treibdampf und wird auf einen mittleren Gegendruck (z.B. 120 mbar) verdichtet. Dieser Mischdampf wird dann auf einen durch Fernwärmewasser gekühlten Heizkondensator gegeben, wodurch sich dieses erwärmt.

Die Erfindung sieht weiter vor, dass stromab des Verdampfers, vor Eintritt in den Kamin, eine Vorrichtung zur Erwärmung eines Abgases angeordnet ist, um dieses wieder auf eine Temperatur oberhalb des Taupunktes zu erwärmen. Die Wiedererwärmung soll dabei den Austrag von Kleinsttröpfchen verhindern (diese verdunsten durch den Wärmeeintrag entsprechend) und zusätzlich den notwendigen Auftrieb des Abgases außerhalb des Abhitzekessels sicherstellen. Darüber hinaus wird der hinter der Wiedererwärmung des Abgases liegende Teil des Abhitzekessels entsprechend vor Korrosion geschützt und muss nicht in besonders korrosionsfestem Material ausgeführt werden.

Für die Wiedererwärmung des Abgases muss dabei vergleichsweise wenig Energie aufgewandt werden, da durch Auskondensation und nachfolgende Abführung des Wasseranteiles und sonstiger in die Flüssigkeit übergehender Rauchgasbestandteile der Abgasmassenstrom verringert und ein vergleichsweise trockenes Abgas wiedererwärmt wird. Außerdem kann deshalb auch die zu erreichende Minimalabgastemperatur bei Austritt in die Umgebung entsprechend verringert werden; statt der üblichen 70°C kann je nach Umgebungsbedingungen durchaus auch nur 40°C eingestellt werden, um einen ausreichenden Auftrieb für das Abgas und eine damit verbundene hinreichende Emissionsausbreitung sicherzustellen.

Für die Wiedererwärmung des Abgases ist die Primärseite der Wärmetauscherfläche in eine zum Treibmedium-Eingang der Strahlpumpe führende Treibdampfleitung geschaltet, d.h. Treibdampf wird enthitzt, bevor er in die Dampfstrahlpumpe eintritt.

Die Wiedererwärmung kann dabei auf verschiedene Weise erfolgen. In einer ersten vorteilhaften Ausführungsform umfasst die Vorrichtung zur Erwärmung eines Abgases eine im Abhitzekessel angeordnete Wärmetauscherfläche.

In einer weiteren vorteilhaften Ausführungsform umfasst die Vorrichtung zur Erwärmung eines Abgases eine Zufuhr von Umgebungsluft mit außerhalb des Abhitzekessels angeordneter Wärmetauscherfläche für die Erwärmung der Umgebungsluft. Die erwärmte Umgebungsluft wird dann dem Abgasstrom beigemischt. Dies hat den Vorteil, dass der Wärmetauscher für die Erwärmung der Umgebungsluft (welche nachfolgend das Abgas erwärmt) nicht besonders korrosionsgeschützt ausgeführt werden muss.

Vorteilhafter Weise ist zusätzlich die Primärseite einer Wärmetauscherfläche in eine Wasserleitung geschaltet, die vom Austritt eines Fernwärmeeconomizers abzweigt, der in Strömungsrichtung eines Abgases stromauf des Verdampfers im Abhitzekessel angeordnet ist, und in den Eintritt des Fernwärmeeconomizers mündet.

Ferner kann bei entsprechend hoher Rücklauftemperatur des Fernwärmesystems dieses vorteilhaft für die Wiedererwärmung genutzt werden, indem die Primärseite der Wärmetauscherfläche in eine Fernwärme-Wasserleitung geschaltet ist.

Eine weitere einfache Möglichkeit ist die Beheizung mittels bereits innerhalb des Kraftwerkes erwärmten Fernwärmewassers.

Falls die Abgastemperatur sehr weit abgesenkt wurde, kann ggf. auch die Abwärme aus den Nebenkühlstellen des Fernwärmekraftwerkes (Generatorkühler, Schmierölkühler, etc.) genutzt werden. Letzteres führt zu einer weiteren Steigerung des Gesamtwirkungsgrades.

Der Heizkondensator, auf den der Mischdampf gegeben wird, sollte mit einer möglichst "kalten" und entsprechend großen Menge an Fernwärmewasser gekühlt werden, um den sich damit einstellenden Gegendruck und den damit im Zusammenhang stehenden Treibdampfbedarf niedrig zu halten. Es ist daher vorteilhaft, wenn die Fernwärmewasserleitung im Betrieb Wasser führt, welches aus einem Fernwärmenetz in das Fernwärmekraftwerk zurückgeführt wird, d.h. es bietet sich insbesondere die Versorgung mit noch nicht innerhalb des Fernwärmekraftwerkes erwärmtem Fernwärmewasser an.

Dabei ist es zweckmäßig, wenn eine Pumpe für die Rückführung eines im Heizkondensator anfallenden Kondensats in den Wasser-Dampf-Kreislauf vorgesehen ist.

Um ein ausreichend hohes Druckniveau für den Treibdampf bereitstellen zu können, ist es vorteilhaft, wenn der Treibmedium-Eingang der Strahlpumpe mit einer Hochdruckdampfleitung, einer Mitteldruckdampfleitung oder einer Niederdruckdampfleitung des Wasser-Dampf-Kreislaufs verbunden ist.

Die zuvor beschriebene Brennwertnutzung durch Festlegung eines entsprechend niedrigen Verdampferdruckes führt durch entsprechende Auslegung des Verdampfers nicht nur zur Unterschreitung des Taupunktes an der Wärmetauscherfläche sondern auch zu einer Abkühlung des Abgases selbst unter den Taupunkt, welches wegen der dann darin enthaltenen "Säuretröpfchen" und auch ggf. wegen des dann eingeschränkten Auftriebes und der damit verbundenen Konzentration von Abgasbestandteilen im Anlagenumfeld nicht mehr in die Umwelt eingeleitet werden kann.

In einer vorteilhaften Ausführungsform der Erfindung umfasst der Verdampfer Wärmetauscherrohre und zumindest ein Teil der in Strömungsrichtung eines Abgases letzten Wärmetauscherrohre weist Tröpfchenfängerprofile auf, welche eine entsprechende Umlenkung des Abgasmassenstromes erzwingen und damit Tröpfchen ab einer bestimmten Größe trägheitsbasiert abscheiden, um diese mit dem restlichen Abgaskondensat aus dem Abhitzekessel heraus zu leiten.

In einer weiteren vorteilhaften Ausführungsform sind die Wärmetauscherrohre und benachbarte Kesselwandungen zumindest teilweise aus korrosionsfestem Material gefertigt, wenn in diesen Bereichen der Taupunkt unterschritten wird. Durch die deutliche Unterschreitung des Wassertaupunktes sind die Anforderungen an die Korrosionsfestigkeit allerdings moderat, da durch den Wasseranteil der Säureanteil entsprechend verdünnt wird.

Bei einem Fernwärmekraftwerk nach der Erfindung steht der Treibdampf für die Dampfstrahlpumpe dann zwar der Dampfturbine nicht mehr zur Verfügung und entsprechend sinkt der elektrische Wirkungsgrad, der Gesamtwirkungsgrad als in der Regel wichtigste Kenngröße eines Fernwärmekraftwerkes wird aber signifikant besser. Es gibt aber auch Betriebsfälle (z.B. zur Deckung des Spitzenwärmebedarfes), bei denen bisher Hochdruckdampf über die Heizkondensatoren direkt zur Erwärmung des Fernwärmewassers eingesetzt werden muss, in diesen Fällen ergibt sich neben der Verbesserung des Gesamtwirkungsgrades auch eine Verbesserung des elektrischen Wirkungsgrades. Falls es sich bei der gasturbinenbasierten Fernwärmeanlage, um eine reine Cogen-Anlage ohne Dampfturbine handelt, gibt es fast keinen Einfluss auf den elektrischen Wirkungsgrad der Anlage (dieser wird durch die verwendete Gasturbine bestimmt und nur der ggf. steigende Abgasdruckverlust wegen der zusätzlichen Kesselheizflächen hat hierauf einen negativen Einfluss).

Darüber hinaus besteht die Möglichkeit, diese Kältemaschine nur bei Bedarf zu nutzen, also wenn der Fernwärmebedarf entsprechend hoch, der Preis für den Strom entsprechend niedrig, etc. ist. Bei Nichtbetrieb der Kältemaschine, steigt der Druck im Verdampfer entsprechend an und verharrt auf einem vergleichsweise niedrigen Niveau (z.B. falls das Abgas mit ∼100°C auf den im Betrieb sub-atmosphärischen Verdampfer trifft, stellt sich mit der Zeit ein Druck von ∼1 bar ein). Damit ist ein zyklischer Betrieb ohne Probleme machbar. Gegenüber der ausschließlichen Nutzung von Fernwärmeeconomizern, kann mittels dieser Kältemaschine die niedrigste Heizflächentemperatur im Abhitzekessel theoretisch bis nahe an die "0°-Grenze" gebracht und damit der Brennwert genutzt werden, wobei auch eine Heizflächentemperatur um 25°C bereits eine signifikante Brennwertnutzung ermöglicht. Normalerweise liegen die Rücklauftemperaturen in Fernwärmenetzen zwischen 45 und 55°C und lassen damit keine oder nur eine sehr eingeschränkte Nutzung des Brennwertes zu. Durch die bisher grundsätzlich vorgesehene Rezirkulation zur Vermeidung der Unterschreitung des Taupunktes an den Fernwärmeeconomizern war die niedrigste Heizflächentemperatur bei um die 55°C festgelegt. Gerade bei erdgasbefeuerten Kraftwerken ist durch den bei der Verbrennung anfallenden relativ großen Wasseranteil dieser Gesamtwirkungsgradgewinn signifikant und kann "100% überschreiten" ("über 100%" sind natürlich nur bei Nutzung des unteren Heizwertes, welcher die Kondensationswärme des Wasseranteils im Abgas nicht berücksichtigt, als Bezugsgröße möglich). Falls zusätzlich noch Wasser in die Gasturbine eingebracht wurde (z.B. zur Kühlung der Verdichteransaugluft, um eine Leistungssteigerung der Gasturbine zu erreichen) steigt der Nutzen der Brennwertnutzung noch weiter an.

Der bei der Brennwertnutzung anfallende signifikante Wasseranteil kann nach entsprechender Aufbereitung (Neutralisierung, etc.) als Zusatzwasser für den Wasser-Dampf-Kreislauf und/oder für das Fernwärmesystem verwendet werden und hat damit den Vorteil, dass der Bedarf an externer Wasserversorgung ggf. auf null sinkt.

Gegenüber einer kompressorbasierten Kältemaschine, mit der im Prinzip genauso die Wärme dem Abgas entnommen und dem Fernwärmesystem zugeführt werden könnte, liegt der Vorteil in der Einfachheit der Dampfstrahler-basierten Kältemaschine. Die Dampfstrahlkältemaschine ist deshalb wesentlich kostengünstiger (da z.B. der Kompressor inkl. Motor mit entsprechender elektrischer Versorgung entfällt) und auch wegen der geringeren Anzahl von aktiven Komponenten zuverlässiger. Der höhere Wirkungsgrad der kompressorbasierten Kältemaschine wirkt sich dabei nur auf den elektrischen Wirkungsgrad der Fernwärmeanlage positiv aus, der viel interessantere Gesamtwirkungsgrad bewegt sich auf einem mit der Dampfstrahlkältemaschine vergleichbaren Niveau.

Da das Kältemittel einer kompressorbasierten Kältemaschine in der Regel brennbar und auch umweltgefährdend ist (und nicht einfach nur Wasser wie bei der Dampfstrahlkältemaschine ist), ist die Integration dieser Kältemaschine in ein gasturbinenbasiertes Fernwärmekraftwerk grundsätzlich viel aufwendiger. In diesem Zusammenhang stellt die sehr große Wärmeübertragerfläche im Abhitzekessel (wegen des vergleichsweise schlechten Wärmeüberganges vom Abgas auf das Kältemittel) ein besonderes Problem dar, da die Kältemittelmenge entsprechend auch sehr groß wird. Oft wird es daher notwendig werden, noch Zwischenkreisläufe vorzusehen, was Kosten und Wirkungsgrad dieser Lösung signifikant verschlechtert.

Die Erfindung wird beispielhaft anhand der Zeichnungen näher erläutert. Es zeigen schematisch und nicht maßstäblich:
Figur 1 ein Fernwärmekraftwerk nach der Erfindung mit dampfbeheizter Wärmetauscherfläche,
Figur 2 ein Fernwärmekraftwerk nach der Erfindung mit Lufteinströmung zur Wiedererwärmung des Abgases,
Figur 3 ein Fernwärmekraftwerk mit Wärmetauscherfläche, die mittels Fernwärmeeconomizer geheizt wird und
Figur 4 ein Fernwärmekraftwerk mit Wärmetauscherfläche, die mittels rücklaufendem Fernwärmewasser geheizt wird.

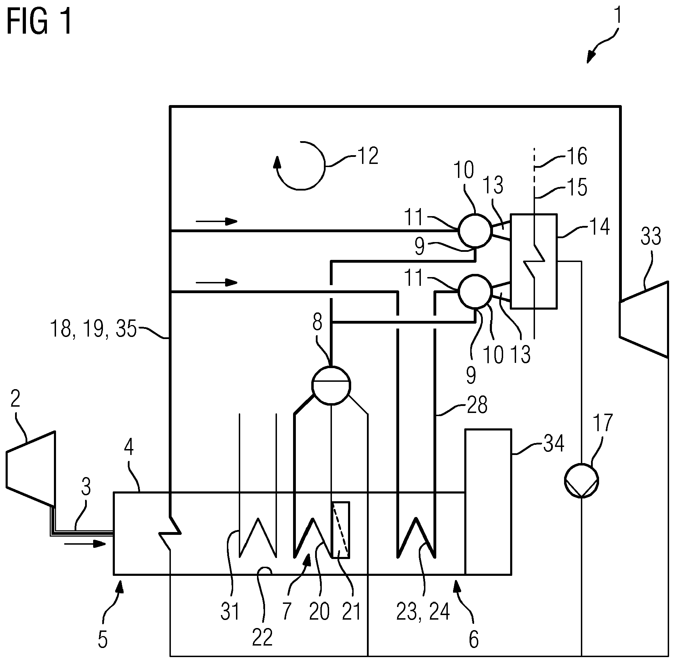

Die Figur 1 zeigt schematisch und beispielhaft ein Fernwärmekraftwerk 1 umfassend eine Gasturbine 2, eine Dampfturbine 33 und einen der Gasturbine 2 in Strömungsrichtung eines Abgases 3 nachgeschalteten Abhitzekessel 4 mit einem der Gasturbine 2 zugewandten heißen Ende 5 und einem gegenüberliegenden, einem Kamin 34 zugewandten, kalten Ende 6. Gemäß der Erfindung ist im Ausführungsbeispiel der Figur 1 stromab der üblicherweise letzten Heizfläche (Fernwärmeeconomizer 31) ein Verdampfer 7 im Bereich des kalten Endes 6 angeordnet. Der Auslass 8 des Verdampfers 7 ist mit einem Saugmedium-Eingang 9 mindestens einer Strahlpumpe 10 (im Ausführungsbeispiel der Figur 1 sind es deren zwei) verbunden. Der Treibmedium-Eingang 11 der Strahlpumpe 10 ist mit einem in der Figur 1 sehr vereinfacht dargestellten Wasser-Dampf-Kreislauf 12 des Fernwärmekraftwerks 1 verbunden. Der Austritt 13 der Strahlpumpe 10 mündet primärseitig in einen Heizkondensator 14, der sekundärseitig in eine Fernwärmewasserleitung 15 geschaltet ist.

Der Heizkondensator 14 sollte mit einer möglichst "kalten" und entsprechend großen Menge an Fernwärmewasser gekühlt werden, um den sich damit einstellenden Gegendruck und den damit im Zusammenhang stehenden Treibdampfbedarf niedrig zu halten. Zu diesem Zweck ist im Ausführungsbeispiel der Figur 1 nicht vorgesehen, dass das Fernwärmewasser bereits innerhalb des Fernwärmekraftwerks 1 erwärmt wurde, bevor es den Heizkondensator 14 durchströmt, sondern die Fernwärmewasserleitung 15 ist direkt mit einem Fernwärmenetz 16 verbunden, so dass der Heizkondensator 14 von in das Fernwärmekraftwerk zurückgeführtem, vergleichsweise kaltem Wasser durchströmt wird.

Die Pumpe 17 führt das im Heizkondensator 14 anfallende Kondensat in den Wasser-Dampf-Kreislauf 12 zurück.

Zur Gewährleistung eines ausreichend hohen Druckniveaus für die Strahlpumpen 10 ist der Treibmedium-Eingang 11 mit einer Hochdruckdampfleitung 18, einer Mitteldruckdampfleitung 19 oder einer Niederdruckdampfleitung 35 des Wasser-Dampf-Kreislaufs 12 verbunden (in der Figur 1 ist der Wasser-Dampf-Kreislauf 12 stark vereinfacht und die Druckstufen sind nicht einzeln dargestellt).

Da mit den zuvor beschriebenen Einbauten die Temperatur des Abgases 3 unter den Taupunkt sinkt, ist im Ausführungsbeispiel der Figur 1 vorgesehen, dass Wärmetauscherrohre 20 des Verdampfers 7 zumindest im stromabwärtigen Teil des Verdampfers 7 Tröpfchenfängerprofile 21 aufweisen.

Zum Schutz vor Korrosion sind die Wärmetauscherrohre 20 sowie benachbarte Kesselwandungen 22 zumindest teilweise aus korrosionsfestem Material gefertigt.

Infolge der Brennwertnutzung ist die Temperatur des Abgases 3 soweit abgesunken, dass der Auftrieb eingeschränkt ist. Um dem abzuhelfen, sieht das Ausführungsbeispiel in Figur 1 vor, dass stromab des Verdampfers 7 eine Vorrichtung 23 zur Erwärmung eines Abgases 3 angeordnet ist, die eine im Abhitzekessel 4 angeordnete Wärmetauscherfläche 24 umfasst, deren Primärseite in eine zum Treibmedium-Eingang 11 der Strahlpumpe 10 führende Treibdampfleitung 28 geschaltet ist.

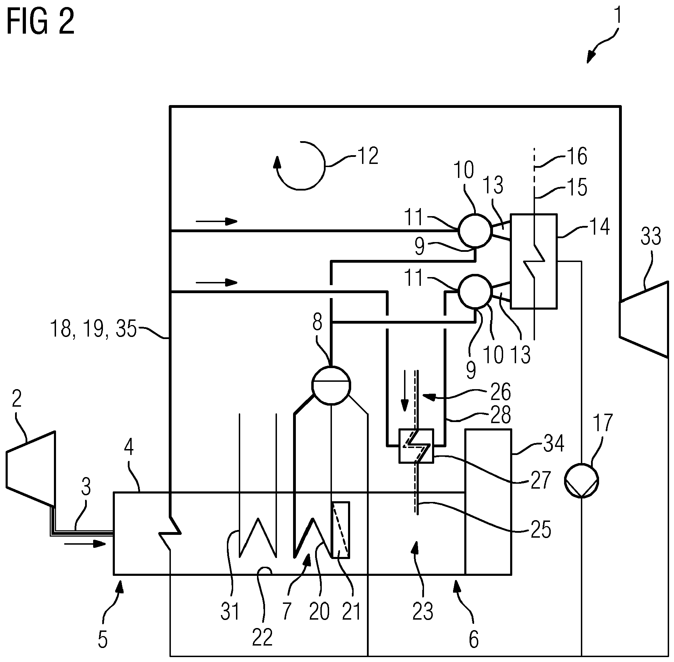

Figur 2 zeigt eine leicht modifizierte Ausführungsform des erfinderischen Fernwärmekraftwerks 1, bei dem die Vorrichtung 23 zur Erwärmung des Abgases 3 eine Zufuhr 25 von Umgebungsluft 26 mit außerhalb des Abhitzekessels 4 angeordneter Wärmetauscherfläche 27 für die Erwärmung der Umgebungsluft 26 umfasst. Die erwärmte Umgebungsluft 26 wird einfach dem Abgasstrom 3 beigemischt.

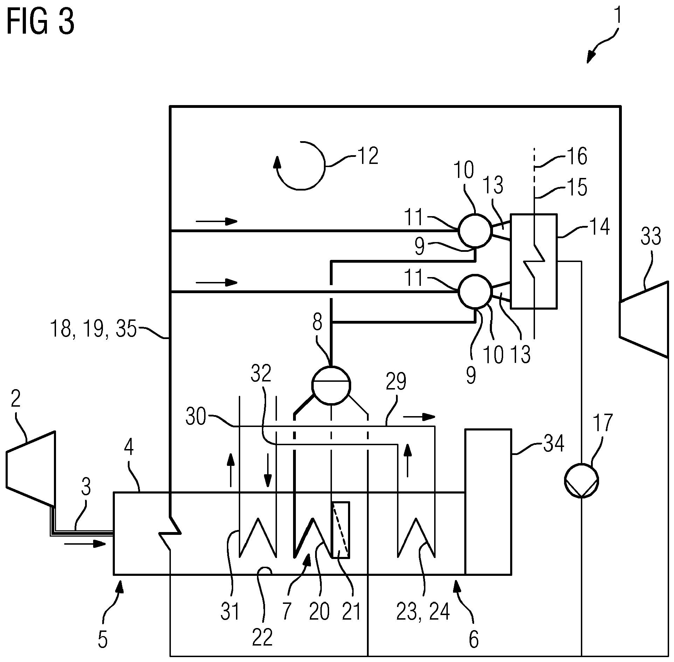

Figur 3 zeigt eine Alternative zur Wiedererwärmung der Abgase 3, wobei die Primärseite der Wärmetauscherfläche 24 in eine Wasserleitung 29 geschaltet ist, die vom Austritt 30 des Fernwärmeeconomizers 31 abzweigt und in den Eintritt 32 des Fernwärmeeconomizers 31 mündet.

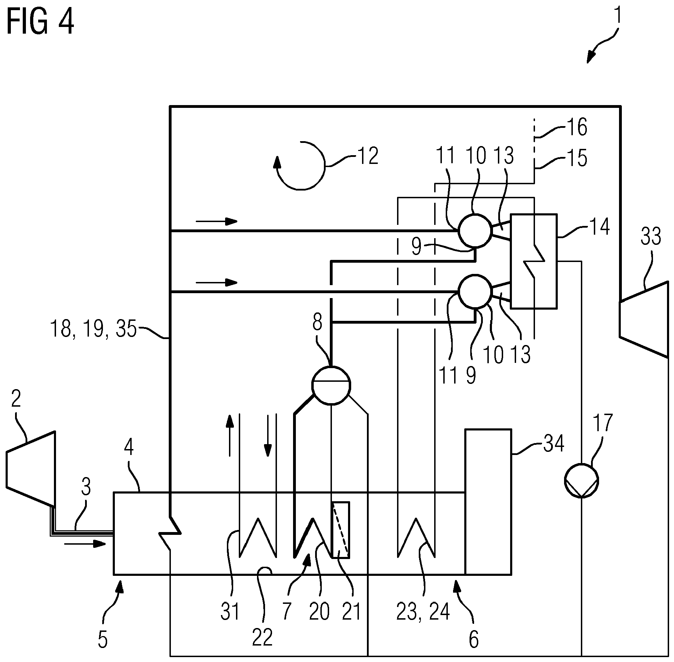

Schließlich ist in der Figur 4 eine Möglichkeit zur Wiedererwärmung der Abgase gezeigt, bei der die Primärseite der Wärmetauscherfläche 24 in eine Fernwärme-Wasserleitung 15 geschaltet ist.

Die in den Ausführungsbeispielen der Figuren 3 und 4 gezeigten Maßnahmen sind mit der aus der Figur 2 bekannten Lösung mit einer Wärmetauscherfläche 27 für Umgebungsluft 26 kombinierbar.

## Patentansprüche

1. Fernwärmekraftwerk (1) umfassend eine Gasturbine (2) und einen der Gasturbine (2) in Strömungsrichtung eines Abgases (3) nachgeschalteten Abhitzekessel (4) mit einem der Gasturbine (2) zugewandten heißen Ende (5) und einem gegenüberliegenden kalten Ende (6), wobei im Bereich des kalten Endes (6) ein Verdampfer (7) mit einem Auslass (8) angeordnet ist, und der Auslass (8) mit einem Saugmedium-Eingang (9) einer Strahlpumpe (10) verbunden ist, deren Treibmedium-Eingang (11) mit einem Wasser-Dampf-Kreislauf (12) des Fernwärmekraftwerks (1) verbunden ist und deren Austritt (13) primärseitig in einen Heizkondensator (14) mündet, der sekundärseitig in eine Fernwärmewasserleitung (15) geschaltet ist, wobei stromab des Verdampfers (7) eine Vorrichtung (23) zur Erwärmung eines Abgases (3) mit einer Wärmetauscherfläche (24, 27) angeordnet ist, **dadurch gekennzeichnet, dass** die Primärseite der Wärmetauscherfläche (24, 27) in eine zum Treibmedium-Eingang (11) der Strahlpumpe (10) führende Treibdampfleitung (28) geschaltet ist.

2. Fernwärmekraftwerk (1) nach Anspruch 1, wobei die Vorrichtung (23) zur Erwärmung eines Abgases (3) eine im Abhitzekessel (4) angeordnete Wärmetauscherfläche (24) umfasst.

3. Fernwärmekraftwerk (1) nach Anspruch 1, wobei die Vorrichtung (23) zur Erwärmung eines Abgases (3) eine Zufuhr (25) von Umgebungsluft (26) mit außerhalb des Abhitzekessels (4) angeordneter Wärmetauscherfläche (27) für die Erwärmung der Umgebungsluft (26) umfasst.

4. Fernwärmekraftwerk (1) nach Anspruch 3, wobei die Primärseite der Wärmetauscherfläche (24) in eine Wasserleitung (29) geschaltet ist, die vom Austritt (30) eines Fernwärmeeconomizers (31) abzweigt, der in Strömungsrichtung eines Abgases (3) stromauf des Verdampfers (7) im Abhitzekessel (4) angeordnet ist, und in den Eintritt (32) des Fernwärmeeconomizers (31) mündet.

5. Fernwärmekraftwerk (1) nach Anspruch 3, wobei die Primärseite der Wärmetauscherfläche (24) in eine Fernwärme-Wasserleitung (15) geschaltet ist.

6. Fernwärmekraftwerk (1) nach einem der vorhergehenden Ansprüche , wobei die Fernwärmewasserleitung (15) im Betrieb Wasser führt, welches aus einem Fernwärmenetz (16) in das Fernwärmekraftwerk (1) zurückgeführt wird.

7. Fernwärmekraftwerk (1) nach einem der vorhergehenden Ansprüche, wobei eine Pumpe (17) für die Rückführung eines im Heizkondensator (14) anfallenden Kondensats in den Wasser-Dampf-Kreislauf (12) vorgesehen ist.

8. Fernwärmekraftwerk (1) nach einem der vorhergehenden Ansprüche, wobei der Treibmedium-Eingang (11) mit einer Hochdruckdampfleitung (18), einer Mitteldruckdampfleitung (19) oder einer Niederdruckdampfleitung (35) des Wasser-Dampf-Kreislaufs (12) verbunden ist.

9. Fernwärmekraftwerk (1) nach einem der vorhergehenden Ansprüche, wobei der Verdampfer (7) Wärmetauscherrohre (20) umfasst und zumindest ein Teil der in Strömungsrichtung eines Abgases (3) letzten Wärmetauscherrohre (20) Tröpfchenfängerprofile (21) aufweist.

10. Fernwärmekraftwerk (1) nach einem der vorhergehenden Ansprüche, wobei der Verdampfer (7) Wärmetauscherrohre (20) und benachbarte Kesselwandungen (22) umfasst, die zumindest teilweise aus korrosionsfestem Material gefertigt sind.

## Claims

1. District heating power plant (1) comprising a gas turbine (2) and a waste heat boiler (4) which is connected downstream of the gas turbine (2) in the flow direction of a waste gas (3) and which has a hot end (5) facing the gas turbine (2) and an opposite cold end (6), wherein an evaporator (7) with an outlet (8) is arranged in the region of the cold end (6), and the outlet (8) is connected to a suction medium inlet (9) of a jet pump (10) whose driving medium inlet (11) is connected to a water-steam circuit (12) of the district heating power plant (1) and whose outlet (13) opens at the primary side into a heating condenser (14) which is connected at the secondary side into a district heating water line (15), wherein a device (23) for heating a waste gas (3) with a heat exchanger surface (24, 27) is arranged downstream of the evaporator (7), **characterized in that** the primary side of the heat exchanger surface (24, 27) is connected into a driving steam line (28) leading to the driving medium inlet (11) of the jet pump (10).

2. District heating power plant (1) according to Claim 1, wherein the device (23) for heating a waste gas (3) comprises a heat exchanger surface (24) arranged in the waste heat boiler (4).

3. District heating power plant (1) according to Claim 1, wherein the device (23) for heating a waste gas (3) comprises a supply (25) of ambient air (26) with a heat exchanger surface (27), arranged outside the waste heat boiler (4), for the heating of the ambient air (26).

4. District heating power plant (1) according to Claim 3, wherein the primary side of the heat exchanger surface (24) is connected into a water line (29) which branches off from the outlet (30) of a district heating economizer (31), which is arranged in the waste heat boiler (4) upstream of the evaporator (7) in the flow direction of a waste gas (3), and opens into the inlet (32) of the district heating economizer (31) .

5. District heating power plant (1) according to Claim 3, wherein the primary side of the heat exchanger surface (24) is connected into a district heating water line (15).

6. District heating power plant (1) according to one of the preceding claims, wherein the district heating water line (15) conducts water during operation, which water is conducted from a district heating network (16) back into the district heating power plant (1).

7. District heating power plant (1) according to one of the preceding claims, wherein a pump (17) is provided for conducting a condensate, which accumulates in the heating condenser (14), back into the water-steam circuit (12).

8. District heating power plant (1) according to one of the preceding claims, wherein the driving medium inlet (11) is connected to a high-pressure steam line (18), a medium-pressure steam line (19) or a low-pressure steam line (35) of the water-steam circuit (12).

9. District heating power plant (1) according to one of the preceding claims, wherein the evaporator (7) comprises heat exchanger tubes (20), and at least some of the last heat exchanger tubes (20) in the flow direction of a waste gas (3) have droplet catcher profiles (21).

10. District heating power plant (1) according to one of the preceding claims, wherein the evaporator (7) comprises heat exchanger tubes (20) and adjacent boiler walls (22), which are produced, at least in part, from corrosion-resistant material.

## Revendications

1. Centrale (1) thermique à grande distance, comprenant une turbine (2) à gaz et une chaudière (4) de récupération de la chaleur perdue montée en aval de la turbine (2) à gaz dans le sens d'écoulement d'un gaz (3) d'échappement et ayant une extrémité (5) chaude tournée vers la turbine (2) à gaz et une extrémité (6) froide opposée, dans laquelle un évaporateur (7), ayant une sortie (8), est monté dans la région de l'extrémité (6) froide et la sortie (8) communique avec une entrée (9) pour du fluide d'aspiration d'un éjecteur (10), dont l'entrée (11) pour du fluide moteur communique avec un circuit (12) eau-vapeur de la centrale (1) thermique à grande distance et dont la sortie (13) débouche du côté primaire dans un appareil (14) de chauffage par condensation, qui est monté, du côté secondaire, dans un conduit (15) de chaleur à grande distance pour de l'eau, dans laquelle il est monté, en aval de l'évaporateur (7), un dispositif (23) pour chauffer un gaz (3) d'échappement par une surface (24, 27) d'échangeur de chaleur, **caractérisée en ce que** le côté primaire de la surface (24, 27) d'échangeur de chaleur est monté dans un conduit (28) pour de la vapeur motrice menant à l'entrée (11) pour du fluide moteur de l'éjecteur (10).

2. Centrale (1) thermique à grande distance suivant la revendication 1, dans laquelle le dispositif (23) pour chauffer un gaz (3) d'échappement comprend une surface (24) d'échangeur de chaleur disposée dans la chaudière (4) à récupération de la chaleur perdue.

3. Centrale (1) thermique à grande distance suivant la revendication 1, dans laquelle le dispositif (23) pour chauffer un gaz (3) d'échappement comprend, pour le chauffage de l'air (26) ambiant, une amenée (25) d'air (26) ambiant ayant une surface (27) d'échangeur de chaleur disposée à l'extérieur de la chaudière (4) à récupération de la chaleur perdue.

4. Centrale (1) thermique à grande distance suivant la revendication 3, dans laquelle le côté primaire de la surface (24) d'échangeur de chaleur est monté dans un conduit (29) pour de l'eau, qui bifurque de la sortie (30) d'un économiseur (31) de chaleur à grande distance, lequel est monté en amont, dans le sens d'écoulement d'un gaz (3) d'échappement, de l'évaporateur (7) dans la chaudière (4) à récupération de la chaleur perdue et débouche dans l'entrée (32) de l'économiseur (31) de chaleur à grande distance.

5. Centrale (1) thermique à grande distance suivant la revendication 3, dans laquelle le côté primaire de la surface (24) d'échangeur de chaleur est monté dans un conduit (15) de chaleur à grande distance pour de l'eau.

6. Centrale (1) thermique à grande distance suivant l'une des revendications précédentes, dans laquelle le conduit (15) de chaleur à grande distance pour de l'eau conduit en fonctionnement de l'eau, qui est retournée d'un réseau (16) de chaleur à grande distance à la centrale (1) thermique à grande distance.

7. Centrale (1) thermique à grande distance suivant l'une des revendications précédentes, dans laquelle il est prévu une pompe (17) pour recycler, dans le circuit (12) eau-vapeur, un condensat se produisant dans l'appareil (14) de chauffage par condensation.

8. Centrale (1) thermique à grande distance suivant l'une des revendications précédentes, dans laquelle l'entrée (11) du fluide moteur communique avec un conduit (18) de vapeur sous haute pression, un conduit (19) de vapeur sous pression moyenne ou un conduit (35) de vapeur sous basse pression du circuit (12) eau-vapeur.

9. Centrale (1) thermique à grande distance suivant l'une des revendications précédentes, dans laquelle l'évaporateur (7) comprend des tubes (20) d'échangeur de chaleur et au moins une partie des derniers tubes (20) d'échangeur de chaleur, dans le sens d'écoulement d'un gaz (3) d'échappement, a des profilés (21) formant séparateur de gouttes.

10. Centrale (1) thermique à grande distance suivant l'une des revendications précédentes, dans laquelle l'évaporateur (7) comprend des tubes (20) d'échangeur de chaleur et des parois (22) voisines de chaudière, qui sont fabriqués, au moins en partie, en un matériau résistant à la corrosion.
